# EUROPEAN PATENT SPECIFICATION

(11) **EP 3 366 496 B1**
(45) Date of publication and mention of the grant of the patent: **12.08.2020**
(21) Application number: 18158024.2
(22) Date of filing: 22.02.2018
(51) Int. Cl.: B60C 17/00

(54) **RUN FLAT TIRE AND METHOD FOR MANUFACTURING SAME**
NOTLAUFREIFEN UND VERFAHREN ZUR HERSTELLUNG DAVON
PNEU DE ROULAGE À PLAT ET SON PROCÉDÉ DE FABRICATION

(30) Priority: 28.02.2017 JP 2017037068
(43) Date of publication of application: 29.08.2018
(73) Proprietor: Sumitomo Rubber Industries, Ltd., Kobe-shi, Hyogo-ken 651-0072 (JP)
(72) Inventor: KAJITA, Hiroaki, Kobe-shi, Hyogo 651-0072 (JP)
(74) Representative: Manitz Finsterwald Patent- und Rechtsanwaltspartnerschaft mbB

(56) References cited:
- JP-A- 2002 301 911
- JP-A- 2009 126 410
- JP-A- 2010 006 327
- JP-A- 2011 057 066

## Description

### Technical Field

The present invention relates to a run flat tire capable of running even in a punctured state, and a manufacturing method thereof.

### Background Art

Conventionally, there has been known a run flat tire in which a side reinforcing rubber layer having a substantially crescent cross-sectional shape is disposed inside a carcass at a side wall portion (see Japanese Unexamined Patent Application Publication No. 2010-6327: Patent Literature 1, for example).

In Patent Literature 1, the side reinforcing rubber layer includes a first rubber portion disposed closest to the tread portion, and a second rubber portion connected with the first rubber portion, extending toward a bead portion, and harder than the first rubber portion.

The run flat tire provided with the side reinforcing rubber layer generally has a high longitudinal blade constant, therefore, ride comfort is deteriorated when compared with a normal pneumatic tire. Even in the run flat tire disclosed in Patent Literature 1, the second rubber portion which is harder than the first rubber portion extends to the vicinity of an outer end of a belt layer, which is a center of ground contacting area during run-flat running, therefore, it is possible that the ride comfort is deteriorated. Further, rigidity difference is likely to be generated in the vicinity of the outer end of the belt layer, therefore, it is possible that it may affect durability due to stress concentration.

A run flat tire in accordance with the pre-characterizing portion of Claim 1 is disclosed in JP 2009-126410 A.

### Summary of the Invention

The present invention was made in view of the above, and a primary object thereof is to provide a run flat tire having the ride comfort and the durability during run flat running improved in a good balance.

In one aspect of the present invention, a run flat tire comprises a carcass extending between a pair of bead cores of bead portions via a tread portion and a pair of sidewall portions, a belt layer formed by a plurality of belt plies arranged outside the carcass in a tire radial direction within the tread portion, and a pair of side reinforcing rubber layers each arranged inside the carcass in each of the sidewall portions and having a substantially crescent cross-sectional shape, wherein each of the side reinforcing rubber layers comprises a first rubber portion arranged on a side of the tread portion and a second rubber portion connected with the first rubber portion so as to have a boundary surface therebetween, extending from the boundary surface toward the adjacent bead portion, and having a modulus larger than the first rubber portion and constant between the boundary surface and the adjacent bead portion, in a tire meridian section passing through a tire rotational axis and in each of the side reinforcing rubber layers, a first point where the boundary surface intersects with an outer surface of the side reinforcing rubber layer in a tire axial direction is arranged on a side of the adjacent bead portion in the tire radial direction of a second point of the outer surface which is a closest point to an outer end of the belt layer in the tire axial direction, a third point where the boundary surface intersects with an axially inner surface of the side reinforcing rubber layer is arranged on a side of the adjacent bead portion in the tire radial direction of the first point and a fourth point which is a closest point of the axially inner surface to the outer end, and a distance L1 along the outer surface between an axially inner end of the first rubber portion and the second point is larger than a distance L2 along the outer surface between the second point and the first point.

In another aspect of the invention, it is preferred that a distance L3 along the inner surface between the axially inner end of the first rubber portion and the fourth point is larger than a distance L4 along the inner surface between the fourth point and the third point.

In another aspect of the invention, it is preferred that a ratio L5/L6 of a distance L5 between the outer end of the belt layer and the second point to a distance L6 between the second point and the fourth point is in a range of from 0.45 to 1.00.

In another aspect of the invention, it is preferred that a ratio L2/L7 of the distance L2 to a distance L7 along an inner circumferential surface of the belt layer between a tire equator and the outer end is in a range of from 0.08 to 0.2.

In another aspect of the invention, it is preferred that a ratio L4/L7 of the distance L4 to the distance L7 is in a range of from 0.13 to 0.3.

According to the invention, in a standard state in which the run flat tire is mounted on a standard rim, inflated to a standard pressure, and loaded with no tire load, a distance L8 in the tire radial direction between a bead base line and the first point is in a range of from 75% to 80% of a tire section height.

According to the invention, in the standard state, a distance L9 in the tire radial direction between the bead base line and the third point is in a range of from 70% to 75% of the tire section height.

In another aspect of the invention, it is preferred that a ratio w1/w2 of a thickness w1 of the first rubber portion at the second point to a maximum thickness w2 of the second rubber portion in the tire axial direction is in a range of from 0.55 to 0.65.

In another aspect of the invention, it is preferred that the first rubber portion is made of rubber having a 2% modulus at 70 degrees Celsius in a range of from 4 to 10 MPa.

In another aspect of the invention, it is preferred that the second rubber portion is made of rubber having a 2% modulus at 70 degrees Celsius in a range of from 10 to 16 MPa.

According to the invention, each of the bead portions is provided with an outer bead apex rubber having a larger modulus than the second rubber portion and arranged axially outside the carcass so as to extend radially outwardly from the bead core in a tapered manner.

In another aspect of the invention, a method for manufacturing the run flat tire includes a green tire forming step of forming a green tire by using a rigid core having a tire-forming surface on an outer surface thereof and sequentially applying unvulcanized tire components on the tire-forming surface, and a vulcanizing step of introducing the green tire together with the rigid core into a vulcanizing mold and vulcanization molding the green tire, wherein the green tire forming step includes a step of winding a first belt-like rubber for forming the first rubber portion outside the tire-forming surface, a step of winding a second belt-like rubber for forming the second rubber portion radially inside the first belt-like rubber, and a step of applying a carcass ply for forming the carcass on outside of the first belt-like rubber and the second belt-like rubber.

### Brief Description of the Drawings

Fig. 1 is a tire meridian cross section passing through a rotational axis of a run flat tire according to the present embodiment in a standard state.
Fig. 2 is an enlarged cross-sectional view of a region from the tread portion to a buttress portion of the run flat tire of Fig. 1.
Fig. 3 is an enlarged cross-sectional view of a region from a shoulder portion to the buttress portion of the tread portion in Fig. 2.
Fig. 4 is an enlarged cross-sectional view of a region from the buttress portion to a bead portion of the run flat tire of Fig. 1.
Fig. 5 is a flowchart showing steps of a manufacturing method of the run flat tire of Fig. 1.
Fig. 6 is a flowchart showing details of a step of manufacturing a green tire of Fig. 5.

### Description of the Preferred Embodiment

An embodiment of the present invention will now be described in conjunction with accompanying drawings.

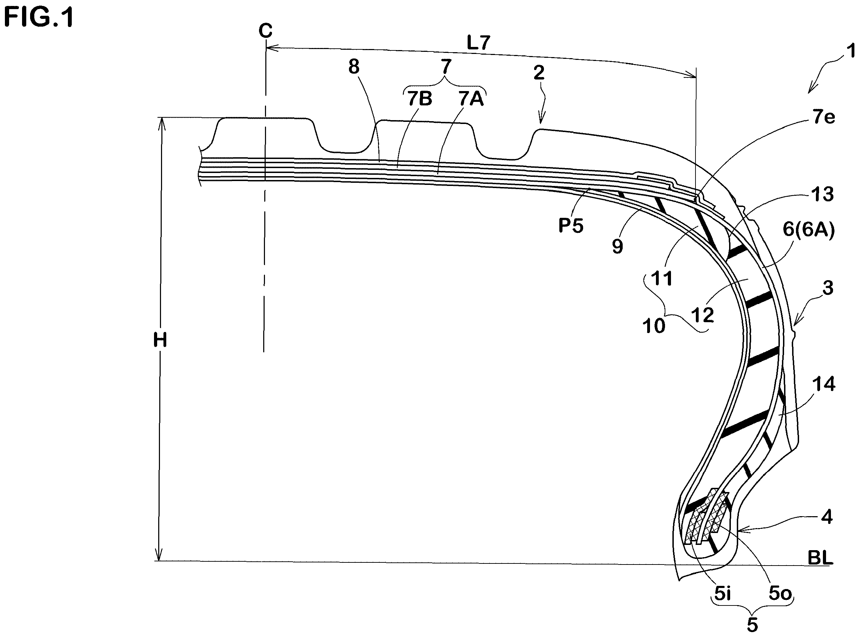

Fig. 1 is a tire meridian section passing through a rotational axis of a run flat tire 1 in this embodiment in a standard state.

The "standard state is a state in which a tire is mounted on a standard rim, inflated to a standard pressure, and loaded with no tire load. Unless otherwise noted, dimensions and the like of various parts of the tire are values measured of the tire in the standard state.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The run flat tire 1 in this embodiment includes a carcass 6 extending between a pair of bead cores 5 of bead portions 4 via a tread portion 2 and sidewall portions 3, a belt layer 7, and side reinforcing rubber layers 10.

The carcass 6 includes at least one carcass ply 6A, and is formed so as to extend between a pair of the bead portions 4 in a toroidal shape.

The belt layer 7 is arranged outside the carcass 6 in a tire radial direction and inside the tread portion 2. The belt layer 7 in this embodiment is formed by the radially inner belt ply 7A and a radially outer belt ply 7B. Each of the belt plies 7A and 7B is formed by belt cords made of steel arranged at an angle in about a range of from 10 to 35 degrees with respect to a tire equator (C), for example. The belt plies 7A and 7B are overlapped so that the belt cords cross each other, and strongly tighten the carcass 6 to increase rigidity of the tread portion 2. Note that the inner belt ply 7A is wider than the outer belt ply 7B, therefore, outer edges (7e) of the belt layer 7 is determined by the inner belt ply 7A. Further, in addition to steel material, highly elastic organic fiber materials such as aramid and rayon can be used for the belt cords as required.

The bead cores 5 are disposed in a pair of bead portions 4. Each of the bead cores 5 in this embodiment includes an inner core (5i) disposed inside the carcass ply 6A in a tire axial direction and an outer core (5o) disposed outside the carcass ply 6B in the tire axial direction.

In this embodiment, a band layer 8 is arranged outside the belt layer 7 in the tire radial direction. The band layer 8 is formed of at least one band ply in which organic fiber cords are arranged at a small angle so as to be not greater than 10 degrees, for example, with respect to a tire circumferential direction. The band ply may be either a jointless band formed by spirally winding a band cord or a ribbon-shaped belt-like ply, or spliced plies.

Each of the side reinforcing rubber layers 10 is arranged inside the carcass 6 in each of the sidewall portions 3 and is formed to have a substantially crescent cross-sectional shape. Each of the side reinforcing rubber layers 10 is arranged so as to extend from one of shoulder portions of the tread portion 2 to one of the bead portions 4 via one of the sidewall portions 3 adjacent thereto. The side reinforcing rubber layers 10 support the load when the tire is punctured and suppress deflection of the tire.

Note that an inner liner layer 9 made of air impermeable rubber is formed inside the carcass 6 and the side reinforcing rubber layers 10, that is, formed on a tire inner cavity surface. By suppressing the deflection of the tire by the side reinforcing rubber layers 10, damage of the inner liner layer 9 due to friction is suppressed, therefore, run flat running becomes possible.

Each of the side reinforcing rubber layers 10 includes a first rubber portion 11 disposed on a side of the tread portion 2, a second rubber portion 12 disposed on a side of the bead portion 4, and a boundary surface 13 between the first rubber portion 11 and the second rubber portion 12. The first rubber portion 11 is formed by a single rubber layer and has a constant modulus from an inner end P5 in the tire axial direction to the boundary surface 13. The second rubber portion 12 is connected with the first rubber portion 11 at the boundary surface 13 and extends toward the bead portion 4. The second rubber portion 12 is made of rubber having a higher modulus than that of the first rubber portion 11. The second rubber portion 12 is formed by a single rubber layer and has a constant modulus from the boundary surface 13 to the bead portions 4 (an inner end in the tire radial direction). Thereby, the configuration and manufacturing process of the run flat tire 1 is simplified, therefore, cost reduction is achieved.

"Modulus" in this specification is a modulus at 2% elongation measured at 70 degrees Celsius according to the test method described in Japanese Industrial Standard JIS K6251 "Tensile Test Method of vulcanized Rubber". The ride comfort is improved by the first rubber portion 11 having a small modulus disposed on the side of the tread portion 2. Further, deflection of the tire when the inner pressure thereof is decreased is suppressed by the second rubber portion 12 having a large modulus disposed on the side of the bead portion 4, therefore, run flat durability is improved.

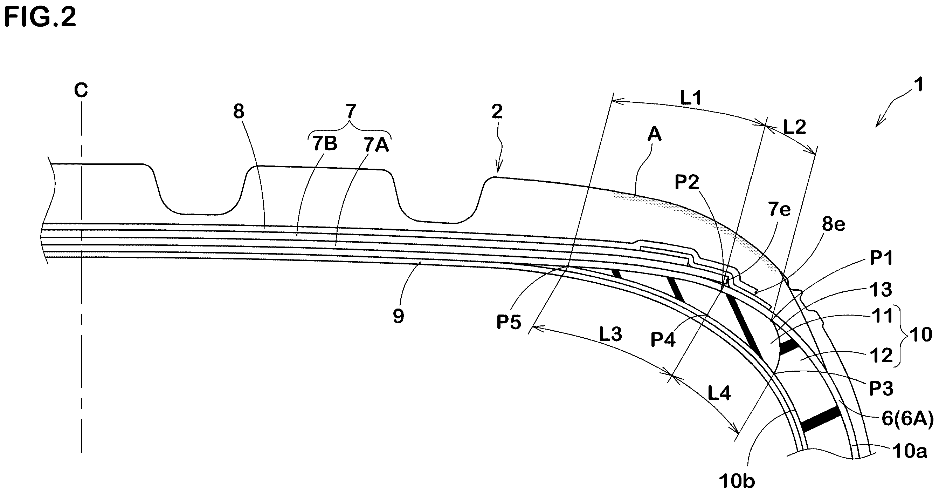

Fig. 2 is an enlarged view of a region between the tread portion 2 and one of buttress portions of the run flat tire 1 of Fig. 1. In the figure, a ground contacting area (A) of the run flat tire 1 with tire pressure of 0 kPa and zero camber angle is shown by hatching. A first point P1 where the boundary surface 13 intersects with an outer surface (10a) of the side reinforcing rubber layer 10 in the tire axial direction is arranged on a side of the bead portion 4 in the tire radial direction of a second point P2 of the outer surface (10a) which is the closest point to an outer end (7e) of the belt layer 7 in the tire axial direction. Thereby, the first point P1, which is an edge on a side of the tread portion 2 of the second rubber portion 12 having a large modulus, is located away from a center of the ground contacting area (A) during run-flat running, therefore, the ride comfort is improved. Further, the rigidity difference is less likely to be generated in the vicinity of the outer end (7e) of the belt layer 7, therefore, the stress concentration is moderated, thereby, the durability is improved.

Further, a third point P3 where the boundary surface 13 intersects with an inner surface (10b) of the side reinforcing rubber layers 10 in the tire axial direction is arranged on a side of the bead portions 4 in the tire radial direction of the first point P1. Furthermore, the third point P3 is arranged on a side of the bead portion 4 in the tire radial direction of a fourth point P4 which is the closest point of the inner surface (10b) to the outer end (7e). Thereby, the area of the first rubber portion 11 is sufficiently secured, therefore, it is possible that the ride comfort is easily improved.

Further, a distance L1 along the outer surface (10a) of the side reinforcing rubber layers 10 between the inner end P5 in the tire axial direction of the first rubber portion 11 and the second point P2 is larger than a distance L2 along the outer surface (10a) of the side reinforcing rubber layers 10 between the second point P2 and the first point P1. Thereby, a region from a region axially inside the ground contacting area (A) to the sidewall portion 3 is gradually reinforced by the first rubber portion 11 and the second rubber portion 12, therefore, durability during run flat running is improved. Further, by the first rubber portion 11 having a smaller modulus than the second rubber portion 12, buckling deformation occurring in the tread portion 2 during run flat running is suppressed, therefore, the durability is improved.

A distance L3 along the inner surface (10b) between the inner end P5 and the fourth point P4 is larger than a distance L4 along the inner surface (10b) between the fourth point P4 and the third point P3. Thereby, a region from a region axially inside the ground contacting area (A) of the tread portion 2 to the sidewall portion 3 is gradually reinforced by the first rubber portion 11 and the second rubber portion 12, therefore, the durability during run flat running is improved.

The first point P1 in this embodiment is arranged axially outside an outer end (8e) of the band layer 8. Thereby, the rigidity of the side reinforcing rubber layer 10 in the vicinity of the outer end (8e) of the band layer 8 in the tire axial direction is moderated, therefore, it is possible that the ride comfort is easily improved.

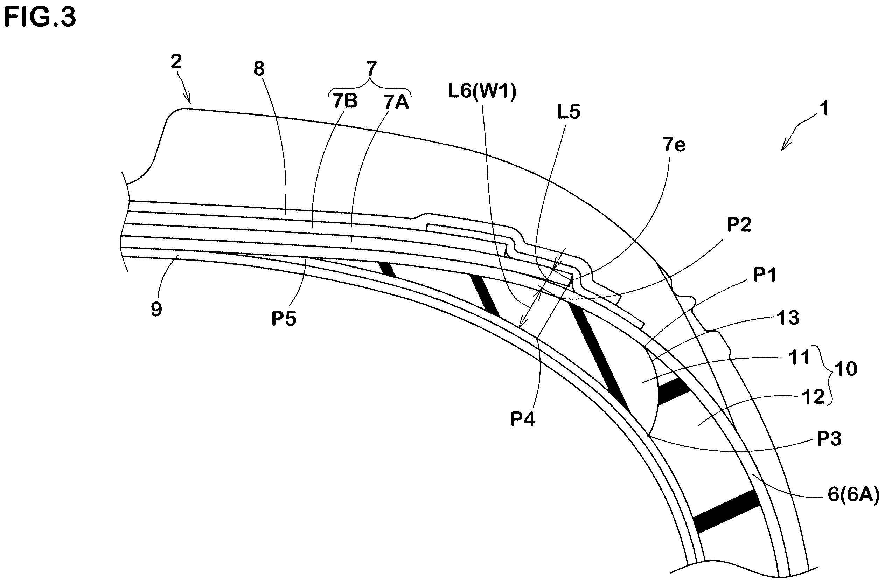

Fig. 3 is an enlarged view of a region between the shoulder portion and the buttress portion of the tread portion 2 of Fig. 2. It is preferred that a ratio L5/L6 of a distance L5 between the outer end (7e) of the belt layer 7 and the second point P2 and a distance L6 between the second point P2 and the fourth point P4 is in a range of from 0.45 to 1.00. If the ratio L5/L6 is less than 0.45, temperature in the vicinity of the outer end (7e) is increased, therefore, it is possible that high-speed durability under the standard pressure is decreased. On the other hand, if the ratio L5/L6 is larger than 1.00, binding effect of the belt layer 7 in the shoulder portions is decreased, therefore, it is possible that handling performance is affected.

It is preferred that a ratio L2/L7 of the distance L2 and a distance L7 (see Fig. 1) along an inner circumferential surface of the belt layer 7 between the tire equator (C) and the outer end (7e) is in a range of from 0.08 to 0.2. If the ratio L2/L7 is less than 0.08, the area of the second rubber portion 12 having a high modulus expands towards the belt layer 7, therefore, it is possible that the ride comfort is affected. On the other hand, if the ratio L2/L7 is larger than 0.2, the area of the first rubber portion 11 having a low modulus expands toward the bead portion 4, therefore, it is possible that the durability during the run flat running is affected. In the run flat tire 1 in this embodiment in which the range of the ratio L2/L7 is optimized and the second rubber portion 12 is formed by a single rubber layer having a constant modulus, the boundary surface 13 between the first rubber portion 11 and the second rubber portion 12 is not arranged in the vicinity of a maximum width portion of the carcass 6. Thereby, the rigidity difference in the side reinforcing rubber layers 10 is not generated in the vicinity of the maximum width portion of the carcass 6, therefore, good durability is obtained.

It is preferred that a ratio L4/L7 of the distance L4 and the distance L7 (see Fig. 1) is in a range of from 0.13 to 0.3. If the ratio L4/L7 is less than 0.13, the area of the second rubber portion 12 having a high modulus expands toward the belt layer 7, therefore, it is possible that the ride comfort is affected. On the other hand, if the ratio L4/L7 is larger than 0.3, the area of the first rubber portion 11 having a low modulus expands toward the bead portion 4, therefore, it is possible that the durability during run flat running is affected.

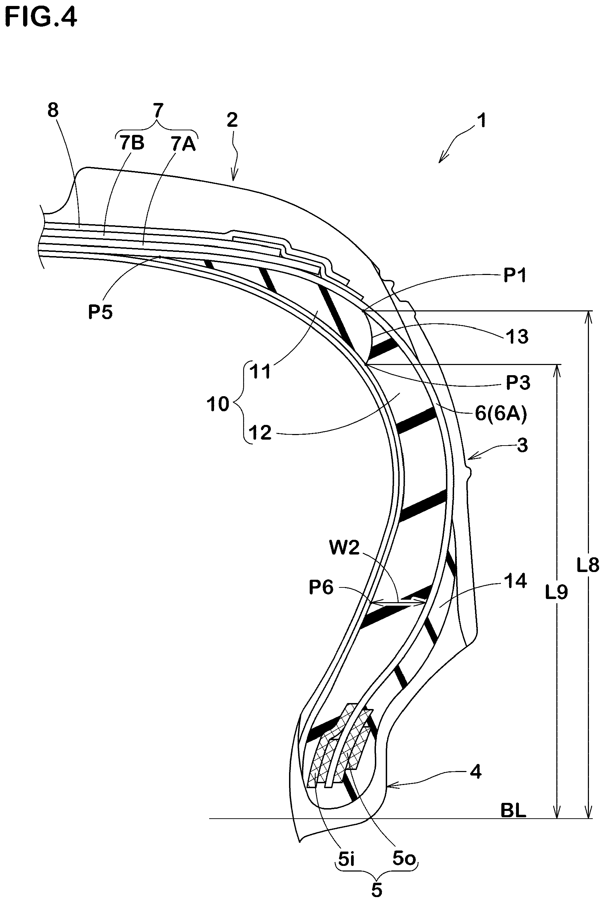

Fig. 4 is an enlarged view of an area between the buttress portion and the bead portion 4 of the run flat tire 1 of Fig. 1. It is preferred that a distance L8 in the tire radial direction between a bead base line BL and the first point P1 in the standard state is in a range of from 75% to 80% of a tire section height (H). The bead base line BL is a line in the tire axial direction passing through a rim diameter position specified in the standard on which the tire is based. If the distance L8 is less than 75% of the tire section height (H), the area of the first rubber portion 11 having a low modulus expands toward the bead portion 4, therefore, it is possible that the durability during run flat running is affected. On the other hand, if the distance L8 is larger than 80% of the tire section height (H), the area of the second rubber portion 12 having a high modulus expands toward the belt layer 7, therefore, it is possible that the ride comfort is affected.

It is preferred that a distance L9 in the tire radial direction between the bead base line BL and the third point P3 in the standard state is in a range of from 70% to 75% of the tire section height (H). If the distance L9 is less than 70% of the tire section height (H), the area of the first rubber portion 11 having a low modulus expands toward the bead portion 4, therefore, it is possible that the durability during run flat running is affected. On the other hand, if the distance L9 is larger than 75% of the tire section height (H), the area of the second rubber portion 12 having a high modulus expands toward the belt layer 7, therefore, it is possible that the ride comfort is affected.

It is preferred that a ratio W1/W2 of a thickness W1 of the first rubber portion 11 at the second point P2 (that is, the distance L6) and a maximum thickness W2 of the second rubber portion 12 in the tire axial direction is in a range of from 0.55 to 0. 65. If the ratio w1/w2 is less than 0.55, reinforcing effect of the side reinforcing rubber layer 10 at the center of the ground contacting area (A) of the tread portion 2 during run flat running is decreased, therefore, it is possible that the durability is affected. Or, the longitudinal blade constant of the run flat tire 1 inflated to the standard pressure is increased, therefore, it is possible that the ride comfort is affected. On the other hand, if the ratio w1/w2 is larger than 0.65, more buckling deformation occurs in the tread portion 2 during run flat running, therefore, it is possible that the durability is affected. Or, the deflection of the sidewall portions 3 is increased during run flat running, therefore, it is possible that the durability is affected.

In the present embodiment, a point P6 at which the maximum thickness W2 in the tire axial direction of the second rubber portion 12 is measured is located on a side of the bead portion 4 in the tire radial direction of the maximum width portion of the carcass 6. Thereby, together with the side reinforcing rubber layers 10 being composed of two layers, flexural rigidity of the sidewall portion 3 gradually increases from the shoulder portion to the bead portion 4, therefore, the ride comfort and the durability during run flat running are improved in a good balance at a high level.

It is preferred that a 2% modulus M1 of the rubber constituting the first rubber portion 11 at 70 degrees Celsius is in a range of from 4 to 10 MPa. If the modulus M1 is less than 4 MPa, the deflection of the tire during run flat running is increased, therefore, it is possible that the durability is affected. If the modulus M1 is larger than 10 MPa, it is possible that the ride comfort is affected.

It is preferred that a 2% modulus M2 of the rubber constituting the second rubber portion 12 at 70 degrees Celsius is in a range of from 10 to 16 MPa. If the modulus M2 is less than 10 MPa, the deflection of the tire during run flat running is increased, therefore, it is possible that the durability is affected. If the modulus M2 is larger than 16 MPa, it is possible that the ride comfort is affected.

As shown in Fig. 1, outer bead apex rubbers 14 are arranged outside the carcass 6 on both sides in the tire axial direction. Each of the outer bead apex rubbers 14 extends radially outwardly from the outer core (5o) in a tapered manner. It is preferred that the outer bead apex rubbers 14 have a modulus greater than that of the second rubber portion 12. It is preferred that a 2% modulus M3 of the outer bead apex rubbers 14 at 70 degrees Celsius is in a range of from 40 to 70 MPa, for example. By the outer bead apex rubbers 14 configured as such, the rigidity of the sidewall portions 3 is gradually increased from the tread portion 2 to the bead portions 4, therefore, the durability during run flat running is improved.

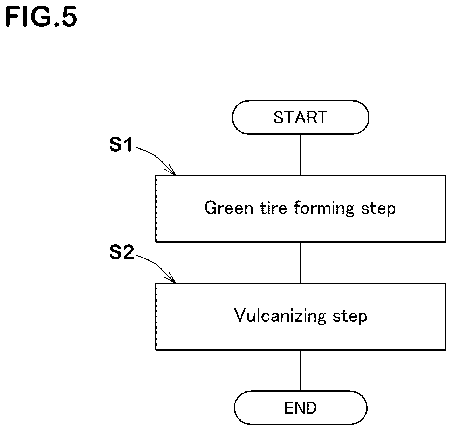

Fig. 5 is a flowchart showing steps of a manufacturing method of the run flat tire of Fig. 1. The manufacturing method of the run flat tire includes a green tire forming step S1 for forming an uncured green tire and a vulcanizing step S2 for vulcanization molding the green tire.

In the green tire forming step S1, a rigid core having a tire-forming surface on an outer surface thereof is used. For the rigid core in this embodiment, a known rigid core can be used. A green tire is formed by sequentially applying unvulcanized tire components onto the tire-forming surface of the rigid core.

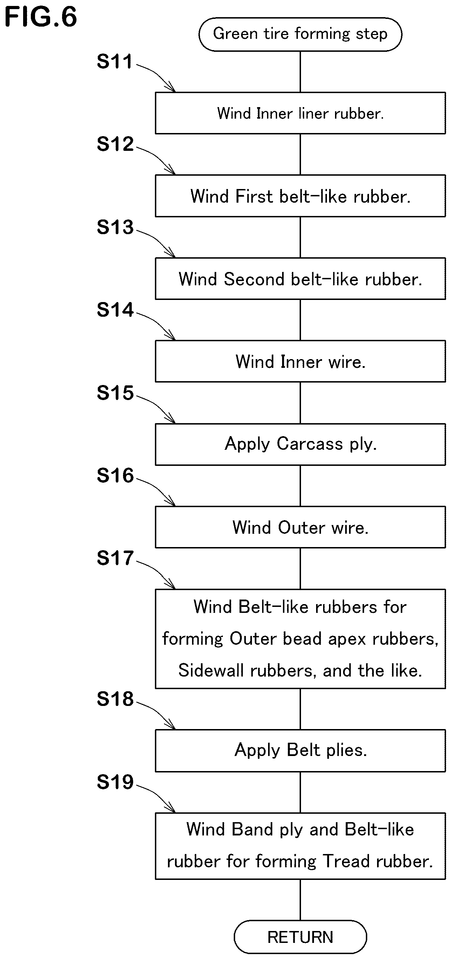

Fig. 6 is a flowchart showing the details of the green tire forming step S1. The green tire forming step S1 includes steps S11 to S19.

In step S11, an inner liner rubber for forming the inner liner layer 9 is wound on the tire-forming surface of the rigid core. In step S12, a first belt-like rubber for forming the first rubber portion 11 is wound around the outer side of the inner liner rubber.

In step S13, a second belt-like rubber for forming the second rubber portion 12 is wound axially outside the inner liner rubber and radially inside the first belt-like rubber. In Steps S12 and S13, the first belt-like rubber and the second belt-like rubber are wound so that the first rubber portion 11 and the second rubber portion 12 have desired dimensions. In Step S14, an inner wire for forming the inner core (5i) is wound radially inside the first belt-like rubber.

In Step S15, the carcass ply 6A for forming the carcass 6 is applied on the outside of the first belt-like rubber and the second belt-like rubber. In step S16, an outer wire for forming the outer core (5o) is wound axially outside the carcass ply 6A. In Step S17, belt-like rubbers for forming the outer bead apex rubbers 14, sidewall rubbers and the like are wound axially outside the carcass ply 6A.

In Step S18, the belt plies 7A and 7B are applied on the radially outside of the carcass ply, and in Step S19, the band ply for forming the band layer 8 and belt-like rubber for forming tread rubber are wound radially outside the belt plies 7A and 7B.

In the vulcanizing step S2, the green tire is introduced into a vulcanizing mold together with the rigid core, and then vulcanization molding is performed. According to this manufacturing method, the green tire is not inflated by a bladder and the like from the green tire forming step S1 to the vulcanizing step S2, therefore, dimensions of the first rubber portion 11 and the second rubber portion 12 of the side reinforcing rubber layers 10 are stabilized, thereby, it is possible that good accuracy is obtained.

while detailed description has been made of the run flat tire and the manufacturing method thereof as embodiments of the present invention, the present invention can be embodied in various forms without being limited to the illustrated embodiment.

### Example (working Example)

Run flat tires of size 245/45R18 having the basic structure shown in Fig. 1 were made by way of test according to the specifications listed in Table 1. Then, each of the test tires was tested for the ride comfort, the run flat durability, the handling performance, and the high-speed durability. Major common specifications and the test methods of the test tires are as follows.
Cord of carcass ply: aramid fiber
Cord of belt ply: steel
Cord of band ply: aramid fiber

### < Ride Comfort >

The test tires were mounted on all wheels of a European sedan car having rims of 18×8J and inflated to 230 kPa. A test driver drove the test car on a dry asphalt road of a test course with the driver being the only member in the test car, and the ride comfort relating to movement above suspension, hardness on shaking, rigid impression, and the like during the test drive was evaluated by the driver's feeling. The results are indicated by an evaluation point based on Example 1 being 100, wherein a larger numerical value is better.

### <Run Flat Durability>

For each of the test tires, running distance was measured by using a run flat durability drum under the conditions specified by ISO. The results are indicated by an index based on Example 1 being 100, wherein a larger numerical value is better.

**Table 1.**

| | | Reference 1 | Reference 2 | Reference 3 | Example 1 |
|---|---|---|---|---|---|
| Structure | | One layer | Two layers | Two layers | Two layers |
| of Side reinforcing rubber layer | | | | | |
| Magnitude correlation | | --- | L1 < L2 | L1 = L2 | L1 > L2 |
| between Distance L1 and Distance L2 | | | | | |
| Magnitude correlation | | --- | L3 < L4 | L3 = L4 | L3 > L4 |
| between Distance L3 and Distance L4 | | | | | |
| Modulus M1 | [MPa] | 10 | 7 | 7 | 7 |
| Modulus M2 | [MPa] | 10 | 13 | 13 | 13 |
| Ride comfort | [evaluation point] | 80 | 60 | 70 | 100 |
| Run flat durability | [index] | 80 | 110 | 110 | 100 |

As is clear from Table 1, it was confirmed that the ride comfort and the run flat durability of the run flat tire as Example 1 were significantly improved in a good balance as compared with References 1 to 3.

Further, run flat tires of size 245/45R18 having the basic structure shown in Fig. 1 were made by way of test according to the specifications listed in Table 2, and then each of the test tires was tested for the handling performance and the high-speed durability. The major common specifications of the test tires are the same as described above. The test methods are as follows.

### < Handling Performance >

The test car was driven on a dry road surface of a circuit track of a test course, and the characteristics related to steering response, responsiveness, and lateral grip were evaluated by the driver's feeling. The results are indicated by an evaluation point based on Example 4 being 100, wherein the larger the numerical value, the better the handling performance is.

### < High-Speed Durability >

Each of the test tires was mounted on a rim of 18×8J and inflated to 230 kPa, and then run on a drum testing machine at a speed of 180 km/h and running time until damage to the belt layer occurred was measured. The results are indicated by an index based on Example 4 being 100, wherein the larger the numerical value, the better the high-speed durability is.

**Table 2.**

| | | Example 2 | Example 3 | Example 4 | Example 5 | Example 6 |
|---|---|---|---|---|---|---|
| Structure | | Two layers | Two layers | Two layers | Two layers | Two layers |
| of Side reinforcing rubber layer | | | | | | |
| Magnitude correlation | | L1 > L2 | L1 > L2 | L1 > L2 | L1 > L2 | L1 > L2 |
| between Distance L1 and Distance L2 | | | | | | |
| Magnitude correlation | | L3 > L4 | L3 > L4 | L3 > L4 | L3 > L4 | L3 > L4 |
| between Distance L3 and Distance L4 | | | | | | |
| Distance L5/ Distance L6 | | 0.30 | 0.45 | 0.73 | 1.00 | 1.20 |
| Modulus M1 | [MPa] | 7 | 7 | 7 | 7 | 7 |
| Modulus M2 | [MPa] | 13 | 13 | 13 | 13 | 13 |
| Handling performance | [evaluation point] | 105 | 105 | 100 | 90 | 85 |
| High-speed durability | [index] | 85 | 90 | 100 | 105 | 105 |

Furthermore, run flat tires of size 245/45R18 having the basic structure shown in Fig. 1 were made by way of test according to the specifications listed in Table 3, and then each of the test tires was tested for the handling performance and the high-speed durability. The major common specifications of the test tires and the test method are the same as described above. The test results are indicated by an index based on Example 9 being 100.

**Table 3.**

| | | Example 7 | Example 8 | Example 9 | Example 10 | Example 11 |
|---|---|---|---|---|---|---|
| Structure | | Two layers | Two layers | Two layers | Two layers | Two layers |
| of Side reinforcing rubber layer | | | | | | |
| Magnitude correlation | | L1 > L2 | L1 > L2 | L1 > L2 | L1 > L2 | L1 > L2 |
| between Distance L1 and Distance L2 | | | | | | |
| Magnitude correlation | | L3 > L4 | L3 > L4 | L3 > L4 | L3 > L4 | L3 > L4 |
| between Distance L3 and Distance L4 | | | | | | |
| Distance L2/ Distance L7 | | 0.04 | 0.08 | 0.14 | 0.20 | 0.22 |
| Distance L4/ Distance L7 | | 0.08 | 0.13 | 0.22 | 0.30 | 0.35 |
| Modulus M1 | [MPa] | 7 | 7 | 7 | 7 | 7 |
| Modulus M2 | [MPa] | 13 | 13 | 13 | 13 | 13 |
| Ride comfort | [evaluation point] | 85 | 90 | 100 | 105 | 105 |
| Run flat durability | [index] | 105 | 105 | 100 | 90 | 85 |

Furthermore, run flat tires of size 245/45R18 having the basic structure shown in Fig. 1 were made by way of test according to the specifications listed in Table 4, and then each of the test tires was tested for the handling performance and the high-speed durability. The major common specifications of the test tires and the test method are the same as described above. The test results are indicated by an index based on Example 14 being 100.

**Table 4.**

| | Example 12 | Example 13 | Example 14 | Example 15 | Example 16 |
|---|---|---|---|---|---|
| Structure | Two layers | Two layers | Two layers | Two layers | Two layers |
| of Side reinforcing rubber layer | | | | | |
| Magnitude correlation | L1 > L2 | L1 > L2 | L1 > L2 | L1 > L2 | L1 > L2 |
| between Distance L1 and Distance L2 | | | | | |
| Magnitude correlation | L3 > L4 | L3 > L4 | L3 > L4 | L3 > L4 | L3 > L4 |
| between Distance L3 and Distance L4 | | | | | |
| Modulus M1 [MPa] | 2 | 4 | 7 | 10 | 12 |
| Modulus M2 [MPa] | 13 | 13 | 13 | 13 | 13 |
| Ride comfort [evaluation point] | 105 | 105 | 100 | 95 | 90 |
| Run flat durability [index] | 90 | 95 | 100 | 105 | 105 |

Furthermore, run flat tires of size 245/45R18 having the basic structure shown in Fig. 1 were made by way of test according to the specifications listed in Table 5, and then each of the test tires was tested for the handling performance and the high-speed durability. The major common specifications of the test tires and the test method are the same as described above. The test results are indicated by an index based on Example 19 being 100.

**Table 5.**

| | | Example 17 | Example 18 | Example 19 | Example 20 | Example 21 |
|---|---|---|---|---|---|---|
| Structure | | Two layers | Two layers | Two layers | Two layers | Two layers |
| of Side reinforcing rubber layer | | | | | | |
| Magnitude correlation | | L1 > L2 | L1 > L2 | L1 > L2 | L1 > L2 | L1 > L2 |
| between Distance L1 and Distance L2 | | | | | | |
| Magnitude correlation | | L3 > L4 | L3 > L4 | L3 > L4 | L3 > L4 | L3 > L4 |
| between Distance L3 and Distance L4 | | | | | | |
| Modulus M1 | [MPa] | 7 | 7 | 7 | 7 | 7 |
| Modulus M2 | [MPa] | 8 | 10 | 13 | 16 | 20 |
| Ride comfort | [evaluation point] | 105 | 105 | 100 | 90 | 80 |
| Run flat durability | [index] | 80 | 90 | 100 | 105 | 105 |

Furthermore, run flat tires of size 245/45R18 having the basic structure shown in Fig. 1 were made by way of test according to the specifications listed in Table 6, and then each of the test tires was tested for the handling performance and the high-speed durability. The major common specifications of the test tires and the test method are the same as described above. The test results are indicated by an index based on Example 23 being 100.

**Table 6.**

| | Example 22 | Example 23 | Example 24 | Example 25 |
|---|---|---|---|---|
| Structure | Two layers | Two layers | Two layers | Two layers |
| of Side reinforcing rubber layer | | | | |
| Magnitude correlation | L1 > L2 | L1 > L2 | L1 > L2 | L1 > L2 |
| between Distance L1 and Distance L2 | | | | |
| Magnitude correlation | L3 > L4 | L3 > L4 | L3 > L4 | L3 > L4 |
| between Distance L3 and Distance L4 | | | | |
| Modulus M1 [MPa] | 7 | 7 | 7 | 7 |
| Modulus M2 [MPa] | 10 | 13 | 16 | 20 |
| Modulus M3 [MPa] | 13 | 40 | 70 | 90 |
| Ride comfort [evaluation point] | 105 | 100 | 90 | 80 |
| Run flat durability [index] | 90 | 100 | 110 | 115 |

## Claims

1. A run flat tire (1) comprising:
a carcass (6) extending between a pair of bead cores (5) of bead portions (4) via a tread portion (2) and a pair of sidewall portions (3),
a belt layer (7) formed by a plurality of belt plies (7A, 7B) arranged outside the carcass (6) in a tire radial direction within the tread portion (2), and
a pair of side reinforcing rubber layers (10) each arranged inside the carcass (6) in each of the sidewall portions (3) and having a substantially crescent cross-sectional shape, wherein
each of the side reinforcing rubber layers (10) comprises a first rubber portion (11) arranged on a side of the tread portion (2) and a second rubber portion (12) connected with the first rubber portion (11) so as to have a boundary surface (13) therebetween, extending from the boundary surface (13) toward the adjacent bead portion (4), and having a modulus at 2% elongation measured at 70 degrees Celsius according to the test method described in Japanese Industrial Standard JIS K6251, the modulus in the second rubber portion (12) being larger than in the first rubber portion (11) and constant between the boundary surface (13) and the adjacent bead portion (4),
in a tire meridian section passing through a tire rotational axis and in each of the side reinforcing rubber layers (10),
a first point (P1) where the boundary surface (13) intersects with an outer surface (10a) of the side reinforcing rubber layer (10) in a tire axial direction is arranged on a side of the adjacent bead portion (4) in the tire radial direction of a second point (P2) of the outer surface (10a) which is a closest point to an outer end (7e) of the belt layer (7) in the tire axial direction,
a third point (P3) where the boundary surface (13) intersects with an axially inner surface (10b) of the side reinforcing rubber layer (10) is arranged on a side of the adjacent bead portion (4) in the tire radial direction of the first point and a fourth point (P4) which is a closest point of the axially inner surface (10b) to the outer end (7e), and
a distance L1 along the outer surface (10a) between an axially inner end (P5) of the first rubber portion (11) and the second point (P2) is larger than a distance L2 along the outer surface (10a) between the second point (P2) and the first point (P1),
**characterized in that**
in a standard state in which the run flat tire (1) is mounted on a standard rim, inflated to a standard pressure, and loaded with no tire load, a distance L8 in the tire radial direction between the bead base line (BL) and the first point (P1) is in a range of from 75% to 80% of the tire section height (H) and a distance L9 in the tire radial direction between a bead base line (BL) and the third point (P3) is in a range of from 70% to 75% of a tire section height (H), and **in that**
each of the bead portions (4) is provided with an outer bead apex rubber (14) having a larger modulus than the second rubber portion (12) and arranged axially outside the carcass (6) so as to extend radially outwardly from the bead core (5) in a tapered manner.

2. The run flat tire (1) according to claim 1, wherein
a distance L3 along the inner surface (10b) between the axially inner end (P5) of the first rubber portion (11) and the fourth point (P4) is larger than a distance L4 along the inner surface (10b) between the fourth point (P4) and the third point (P3).

3. The run flat tire (1) according to claim 1 or 2, wherein
a ratio L5/L6 of a distance L5 between the outer end (7e) of the belt layer (7) and the second point (P2) to a distance L6 between the second point (P2) and the fourth point (P4) is in a range of from 0.45 to 1.00.

4. The run flat tire (1) according to claim 2, wherein
a ratio L2/L7 of the distance L2 to a distance L7 along an inner circumferential surface of the belt layer (7) between a tire equator (C) and the outer end (7e) is in a range of from 0.08 to 0.2.

5. The run flat tire (1) according to claim 4, wherein
a ratio L4/L7 of the distance L4 to the distance L7 is in a range of from 0.13 to 0.3.

6. The run flat tire (1) according to any one of claims 1 to 5, wherein
a ratio w1/w2 of a thickness w1 of the first rubber portion (11) at the second point (P2) to a maximum thickness w2 of the second rubber portion (12) in the tire axial direction is in a range of from 0.55 to 0.65.

7. The run flat tire (1) according to any one of claims 1 to 6, wherein
the first rubber portion (11) is made of rubber having a 2% modulus at 70 degrees Celsius in a range of from 4 to 10 MPa.

8. The run flat tire (1) according to any one of claims 1 to 7, wherein
the second rubber portion (12) is made of rubber having a 2% modulus at 70 degrees Celsius in a range of from 10 to 16 MPa.

9. A method for manufacturing the run flat tire (1) according to any one of claims 1 to 8, including:
a green tire forming step (S1) of forming a green tire by using a rigid core having a tire-forming surface on an outer surface thereof and sequentially applying unvulcanized tire components on the tire-forming surface, and
a vulcanizing step (S2) of introducing the green tire together with the rigid core into a vulcanizing mold and vulcanization molding the green tire,
wherein
the green tire forming step (S1) includes
a step (S12) of winding a first belt-like rubber for forming the first rubber portion (11) outside the tire-forming surface,
a step (S13) of winding a second belt-like rubber for forming the second rubber portion (12) radially inside the first belt-like rubber, and
a step (S15) of applying a carcass ply for forming the carcass (6) on outside of the first belt-like rubber and the second belt-like rubber.

## Patentansprüche

1. Notlaufreifen (1), umfassend:
eine Karkasse (6), die sich zwischen einem Paar Wulstkernen (5) von Wulstabschnitten (4) über einen Laufflächenabschnitt (2) und ein Paar Seitenwandabschnitte (3) erstreckt,
eine Gürtelschicht (7), die durch eine Vielzahl von Gürtellagen (7A, 7B) gebildet ist, die außerhalb der Karkasse (6) in einer radialen Richtung des Reifens innerhalb des Laufflächenabschnitts (2) angeordnet sind, und
ein Paar Seitenverstärkungs-Gummischichten (10), die jeweils innerhalb der Karkasse (6) in jedem der Seitenwandabschnitte (3) angeordnet sind und eine im Wesentlichen halbmondförmige Querschnittsform aufweisen, wobei
jede der Seitenverstärkungs-Gummischichten (10) einen ersten Gummiabschnitt (11) umfasst, der auf einer Seite des Laufflächenabschnitts (2) angeordnet ist, und einen zweiten Gummiabschnitt (12), der mit dem ersten Gummiabschnitt (11) so verbunden ist, dass eine Grenzfläche (13) dazwischen vorliegt, und der sich von der Grenzfläche (13) in Richtung des benachbarten Wulstabschnitts (4) erstreckt, und mit einem Modul bei 2% Dehnung, gemessen bei 70 Grad Celsius nach dem im japanischen Industriestandard JIS K6251 beschriebenen Prüfverfahren, wobei der Modul in dem zweiten Gummiabschnitt (12) größer ist als in dem ersten Gummiabschnitt (11) und zwischen der Grenzfläche (13) und dem benachbarten Wulstabschnitt (4) konstant ist,
in einem durch eine Reifendrehachse verlaufenden Reifenmeridianschnitt und in jeder der Seitenverstärkungs-Gummischichten (10),
ein erster Punkt (P1), an dem die Grenzfläche (13) eine äußere Oberfläche (10a) der Seitenverstärkungs-Gummischicht (10) in einer axialen Richtung des Reifens schneidet, auf der Seite des benachbarten Wulstabschnitts (4) in der radialen Richtung des Reifens von einem zweiten Punkt (P2) der äußeren Oberfläche (10a), der einem äußeren Ende (7e) der Gürtelschicht (7) in der axialen Richtung des Reifens am nächsten liegt, angeordnet ist,
ein dritter Punkt (P3), an dem die Grenzfläche (13) eine axial innere Oberfläche (10b) der Seitenverstärkungs-Gummischicht (10) schneidet, auf einer Seite des benachbarten Wulstabschnitts (4) in der radialen Richtung des Reifens von dem ersten Punkt und von einem ein vierten Punkt (P4), der ein Punkt der axial inneren Oberfläche (10b) ist, der dem äußeren Ende (7e) am nächsten liegt, angeordnet ist, und
ein Abstand L1 entlang der äußeren Oberfläche (10a) zwischen einem axial inneren Ende (P5) des ersten Gummiabschnitts (11) und dem zweiten Punkt (P2) größer ist als ein Abstand L2 entlang der äußeren Oberfläche (10a) zwischen dem zweiten Punkt (P2) und dem ersten Punkt (P1),
**dadurch gekennzeichnet, dass**
in einem Standardzustand, in dem der Notlaufreifen (1) auf einer Standardfelge montiert, auf einen Standarddruck aufgepumpt und ohne Reifenlast belastet ist, ein Abstand L8 in der radialen Richtung des Reifens zwischen der Wulstbasislinie (BL) und dem ersten Punkt (P1) in einem Bereich von 75% bis 80% der Reifenquerschnittshöhe (H) liegt und ein Abstand L9 in der radialen Richtung des Reifens zwischen einer Wulstbasislinie (BL) und dem dritten Punkt (P3) in einem Bereich von 70% bis 75% einer Reifenquerschnittshöhe (H) liegt, und dass
jeder der Wulstabschnitte (4) mit einem äußeren Wulstkernreitergummi (14) versehen ist, der einen größeren Modul als der zweite Gummiabschnitt (12) aufweist und axial außerhalb der Karkasse (6) so angeordnet ist, dass er sich von dem Wulstkern (5) in einer konischen Weise radial nach außen erstreckt.

2. Notlaufreifen (1) nach Anspruch 1, wobei ein Abstand L3 entlang der inneren Oberfläche (10b) zwischen dem axial inneren Ende (P5) des ersten Gummiabschnitts (11) und dem vierten Punkt (P4) größer ist als ein Abstand L4 entlang der inneren Oberfläche (10b) zwischen dem vierten Punkt (P4) und dem dritten Punkt (P3).

3. Notlaufreifen (1) nach Anspruch 1 oder 2, wobei ein Verhältnis L5/L6 eines Abstands L5 zwischen dem äußeren Ende (7e) der Gürtelschicht (7) und dem zweiten Punkt (P2) zu einem Abstand L6 zwischen dem zweiten Punkt (P2) und dem vierten Punkt (P4) in einem Bereich von 0,45 bis 1,00 liegt.

4. Notlaufreifen (1) nach Anspruch 2, wobei ein Verhältnis L2/L7 des Abstands L2 zu einem Abstand L7 entlang einer inneren Umfangsfläche der Gürtelschicht (7) zwischen einem Reifenäquator (C) und dem äußeren Ende (7e) in einem Bereich von 0,08 bis 0,2 liegt.

5. Notlaufreifen (1) nach Anspruch 4, wobei ein Verhältnis L4/L7 des Abstands L4 zu dem Abstand L7 in einem Bereich von 0,13 bis 0,3 liegt.

6. Notlaufreifen (1) nach einem der Ansprüche 1 bis 5, wobei ein Verhältnis W1/W2 einer Dicke W1 des ersten Gummiabschnitts (11) an dem zweiten Punkt (P2) zu einer maximalen Dicke W2 des zweiten Gummiabschnitts (12) in der axialen Richtung des Reifens in einem Bereich von 0,55 bis 0,65 liegt.

7. Notlaufreifen (1) nach einem der Ansprüche 1 bis 6, wobei der erste Gummiabschnitt (11) aus Kautschuk mit einem 2%-Modul bei 70 Grad Celsius in einem Bereich von 4 bis 10 MPa hergestellt ist.

8. Notlaufreifen (1) nach einem der Ansprüche 1 bis 7, wobei der zweite Gummiabschnitt (12) aus Kautschuk mit einem 2%-Modul bei 70 Grad Celsius in einem Bereich von 10 bis 16 MPa hergestellt ist.

9. Verfahren zur Herstellung des Notlaufreifens (1) nach einem der Ansprüche 1 bis 8, das einschließt:
einen Rohreifenformungsschritt (S1) eines Formens eines Rohreifens unter Verwendung eines starren Kerns mit einer Reifenformungsoberfläche auf einer äußeren Oberfläche davon und eines sequentiellen Aufbringens unvulkanisierter Reifenkomponenten auf die Reifenformungsoberfläche, und
einen Vulkanisierschritt (S2), eines Einbringens des Rohreifens zusammen mit dem starren Kern in eine Vulkanisierform und eines Vulkanisierens des Rohreifens,
wobei der Rohreifenformungsschritt (S1) umfasst
einen Schritt (S12) eines Wickelns eines ersten gürtelartigen Kautschuks zum Bilden des ersten Gummiabschnitts (11) außerhalb der Reifenformungsoberfläche,
einen Schritt (S13) eines Wickelns eines zweiten gürtelartigen Kautschuks zum Bilden des zweiten Gummiabschnitts (12) radial innerhalb des ersten gürtelartigen Kautschuks, und
einen Schritt (S15) eines Anbringens einer Karkasslage zur Bildung der Karkasse (6) auf der Außenseite des ersten gürtelartigen Kautschuks und des zweiten gürtelartigen Kautschuks.

## Revendications

1. Pneumatique de roulage à plat (1) comprenant :
une carcasse (6) s'étendant entre une paire d'âmes de talons (5) de portions formant talons (4) via une portion formant bande de roulement (2) et une paire de portions formant parois latérales (3),
une couche de ceinture (7) formée par une pluralité de nappes de ceinture (7A, 7B) agencées à l'extérieur de la carcasse (6) dans une direction radiale du pneumatique à l'intérieur de la portion formant bande de roulement (2), et
une paire de couches de caoutchouc de renforcement latéral (10), agencées chacune à l'intérieur de la carcasse (6) dans chacune des portions formant parois latérales (3), et ayant une forme de section transversale sensiblement en forme de croissant, dans lequel chacune des couches de caoutchouc de renforcement latéral (10) comprend une première portion en caoutchouc (11) agencée sur un côté de la portion formant bande de roulement (2) et une seconde portion en caoutchouc (12) connectée avec la première portion en caoutchouc (11) de manière à présenter une surface frontière (13) entre celles-ci, s'étendant depuis la surface frontière (13) en direction de la portion formant talon (4) adjacente, et ayant un module à 2 % d'élongation, mesuré à 70 °C en accord avec la méthode de test décrite dans la norme industrielle japonaise JIS K6251, le module dans la seconde portion en caoutchouc (12) étant plus élevé que dans la première portion en caoutchouc (11) et étant constant entre la surface frontière (13) et la portion formant talon (4) adjacente,
dans une section méridienne du pneumatique passant par un axe de rotation du pneumatique et dans chacune des couches de caoutchouc de renforcement latéral (10) :
un premier point (P1) où la surface frontière (13) recoupe une surface extérieure (10a) de la couche de caoutchouc de renforcement latéral (10) dans une direction axiale du pneumatique est agencé sur un côté de la portion formant talon (4) adjacente dans la direction radiale du pneumatique d'un second point (P2) de la surface extérieure (10a), qui est un point le plus rapproché d'une extrémité extérieure (7e) de la couche de ceinture (7) dans la direction axiale du pneumatique,
un troisième point (P3) où la surface frontière (13) recoupe une surface axialement intérieure (10b) de la couche de caoutchouc de renforcement latéral (10) est agencé sur un côté de la portion formant talon (4) adjacente dans la direction radiale du pneumatique du premier point et un quatrième point (P4) qui est un point le plus rapproché de la surface axialement intérieure (10b) vers l'extrémité extérieure (7e), et
une distance L1 le long de la surface extérieure (10a) entre une extrémité axialement intérieure (P5) de la première portion en caoutchouc (11) et le second point (P2) est plus grande qu'une distance L2 le long de la surface extérieure (10a) entre le second point (P2) et le premier point (P1),
**caractérisé en ce que**
dans un état standard dans lequel le pneumatique de roulage à plat (1) est monté sur une jante standard, gonflé à une pression standard, et sans appliquer de charge au pneumatique, une distance L8 dans la direction radiale du pneumatique entre la ligne de base de talon (BL) et le premier point (P1) est dans une plage de 75 % à 80 % de la hauteur de section (H) du pneumatique et une distance L9 dans la direction radiale du pneumatique entre une ligne de base de talon (BL) et le troisième point (P3) est dans une plage de 70 % à 75 % d'une hauteur de section (H) du pneumatique, et
**en ce que** chacune des portions formant talons (4) est dotée d'un caoutchouc de coiffe de talon (14) extérieur ayant un module plus élevé que la seconde portion en caoutchouc (12) et agencé axialement à l'extérieur de la carcasse (6) de manière à s'étendre radialement vers l'extérieur depuis l'âme de talon (5) d'une manière effilée.

2. Pneumatique de roulage à plat (1) selon la revendication 1, dans lequel une distance L3 le long de la surface intérieure (10b) entre l'extrémité axialement intérieure (P5) de la première portion en caoutchouc (11) et le quatrième point (P4) est plus grande qu'une distance L4 le long de la surface intérieure (10b) entre le quatrième point (P4) et le troisième point (P3).

3. Pneumatique de roulage à plat (1) selon la revendication 1 ou 2, dans lequel
un rapport L5/L6 d'une distance L5 entre l'extrémité extérieure (7e) de la couche de ceinture (7) et le second point (P2) sur une distance L6 entre le second point (P2) et le quatrième point (P4) est dans une plage de 0,45 à 1,00.

4. Pneumatique de roulage à plat (1) selon la revendication 2, dans lequel un rapport L2/L7 de la distance L2 sur une distance L7 le long d'une surface circonférentielle intérieure de la couche de ceinture (7) entre un équateur de pneumatique (C) et l'extrémité extérieure (7e) est dans une plage de 0,08 à 0,2.

5. Pneumatique de roulage à plat (1) selon la revendication 4, dans lequel un rapport L4/L7 de la distance L4 sur la distance L7 est dans une plage de 0,13 à 0,3.

6. Pneumatique de roulage à plat (1) selon l'une quelconque des revendications 1 à 5, dans lequel
un rapport W1/W2 d'une épaisseur W1 de la première portion en caoutchouc (11) au niveau du second point (P2) sur une épaisseur maximum W2 de la seconde portion en caoutchouc (12) dans la direction axiale du pneumatique est dans une plage de 0,55 à 0,65.

7. Pneumatique de roulage à plat (1) selon l'une quelconque des revendications 1 à 6, dans lequel
la première portion en caoutchouc (11) est faite d'un caoutchouc ayant un module de 2 % à 70 °C dans une plage de 4 à 10 MPa.

8. Pneumatique de roulage à plat (1) selon l'une quelconque des revendications 1 à 7, dans lequel
la seconde portion en caoutchouc (12) est faite d'un caoutchouc ayant un module de 2 % à 70 °C dans une plage de 10 à 16 MPa.

9. Procédé pour fabriquer le pneumatique de roulage à plat (1) selon l'une quelconque des revendications 1 à 8, incluant :
une étape de formation de pneumatique vert (S1) consistant à former un pneumatique vert en utilisant un noyau rigide ayant une surface de formation de pneumatique sur sa surface extérieure, et à appliquer en séquence des composants de pneumatique non vulcanisés sur la surface de formation de pneumatique, et
une étape de vulcanisation (S2) consistant à introduire le pneumatique vert conjointement avec le noyau rigide dans un moule de vulcanisation et à mouler avec vulcanisation le pneumatique vert,
dans lequel
l'étape de formation de pneumatique vert (S1) inclut
une opération (S12) consistant à enrouler un premier caoutchouc en forme de ceinture pour former la première portion en caoutchouc (11) à l'extérieur de la surface de formation de pneumatique,
une opération (S13) consistant à enrouler un second caoutchouc en forme de ceinture pour former la seconde portion en caoutchouc (12) radialement à l'intérieur du premier caoutchouc en forme de ceinture, et
une opération (S15) consistant à appliquer une nappe de carcasse pour former la carcasse (6) sur l'extérieur du premier caoutchouc en forme de ceinture et du second caoutchouc en forme de ceinture.
